# EUROPÄISCHE PATENTANMELDUNG

(11) **EP 3 239 073 A1**
(43) Veröffentlichungstag der Anmeldung: **01.11.2017**
(21) Anmeldenummer: 17152081.0
(22) Anmeldetag: 19.01.2017
(51) Int. Cl.: B65G 1/02

(54) **REGAL, LASTTRÄGER HIERFÜR UND VERFAHREN ZUR HERSTELLUNG**

(30) Priorität: 28.04.2016 DE 102016107962; 02.11.2016 DE 102016120869
(71) Anmelder: WITRON Logistik + Informatik GmbH, 92711 Parkstein (DE)
(72) Erfinder: Bruckner, Günter, 92253 Schnaittenbach (DE); Bösl, Thomas, 92253 Schnaittenbach (DE); Ketelaar, Stefan, 92711 Parkstein (DE); Müller, Fabian, 92708 Mantel (DE)
(74) Vertreter: Lang, Christian

(57) **Zusammenfassung**

Die Erfindung betrifft einen Lastträger (3,4) für ein Regal (1) zur Anordnung an einem oder mehreren Regalständern (2) und zur Aufnahme von Lasten (6) mit einem Lastaufnahmeflächenabschnitt zur Lagerung von Lasten und einem Ständeranlageflächenabschnitt zur Anordnung des Lastträgers an dem oder den Regalständern, wobei der Lastaufnahmeflächenabschnitt sich entlang der Länge und Breite des Lastträgers erstreckt und der Ständeranlageflächenabschnitt sich entlang der Länge und der Höhe des Lastträgers verläuft, wobei Lastaufnahmeflächenabschnitt und Ständeranlageflächenabschnitt quer zueinander angeordnet sind, um einen Auflagewinkel zu bilden, wobei zur Versteifung des Lastträgers Lastaufnahmeflächenabschnitt und/oder Ständeranlageflächenabschnitt Teil eine Hohlprofils sind und/oder eine oder mehrere Sicken aufweisen. Außerdem betrifft die Erfindung ein Regal mit entsprechenden Lastträgern sowie eine Verfahren zu deren Herstellung.

## Beschreibung

### HINTERGRUND DER ERFINDUNG

### GEBIET DER ERFINDUNG

Die vorliegende Erfindung betrifft ein Regal mit Regalständern und an den Regalständern angeordnete Lastträger zur Aufnahme von Gegenständen zwischen den Regalständern auf den Lastträgern. Darüber hinaus betrifft die Erfindung Lastträger für ein entsprechendes Regal sowie ein Verfahren zur Herstellung entsprechender Lastträger.

### STAND DER TECHNIK

Regale sind in unterschiedlichsten Ausführungsformen in vielen Bereichen im Einsatz. Bei den hier behandelten Regalen handelt es sich um Regale für gewerblich oder industriell eingesetzte Lager mit hohen Aufnahmekapazitäten, beispielsweise für die Lagerung von Handelswaren. Durch die große Dimensionierung derartiger Regale, die üblicherweise aus Regalständern und dazwischen angeordneten Fachböden oder Lastträgern aufgebaut sind, weisen diese häufig ein hohes Gewicht auf, welches von der Gebäudestruktur abgetragen werden muss. Insbesondere wenn schwere Güter in dem Regal gelagert werden sollen, müssen die Regalständer und die Lastträger, die an den Regalständern angeordnet sind, um die zu lagernden Waren oder Lastaufnahmemittel zu lagern, entsprechend groß dimensioniert sein, sodass sich die Gewichtsproblematik weiter verschärft. Außerdem erhöhen sich durch einen hohen Materialeinsatz auch die Kosten für die Herstellung des Regals bzw. der Lastträger.

Entsprechende Lastträger für Regale sind üblicherweise als Winkelprofile ausgebildet, wobei ein Schenkel des Winkelprofils einen Ständeranlageflächenabschnitt darstellt, der in Anlage an den Regalständer an diesem angeordnet wird, während der üblicherweise senkrecht von dem Ständeranlageflächenabschnitt hervorstehende Schenkel, die Last aufnimmt und entsprechend als Lastaufnahmeflächenabschnitt bezeichnet werden kann.

### OFFENBARUNG DER ERFINDUNG

### AUFGABE DER ERFINDUNG

Es ist Aufgabe der vorliegenden Erfindung einen Lastträger bzw. ein Regal mit entsprechenden Lastträgern und ein Verfahren zur Herstellung der Lastträger bereitzustellen, bei welchem die Lastträger bei gleicher oder verbesserter Lastaufnahmefähigkeit, also entsprechend hoher Festigkeit und insbesondere Biegesteifigkeit, der Materialeinsatz und somit das Gewicht und die Kosten reduziert werden können.

### TECHNISCHE LÖSUNG

Diese Aufgabe wird gelöst durch einen Lastträger mit den Merkmalen des Anspruchs 1 sowie einem Verfahren zur Herstellung eines entsprechenden Lastträgers mit den Merkmalen des Anspruchs 13 und einem Regal mit den entsprechenden Lastträgern mit den Merkmalen 16. Vorteilhafte Ausgestaltungen sind Gegenstand der abhängigen Ansprüche.

Die Erfindung schlägt vor, die Festigkeit und Steifigkeit und insbesondere Biegesteifigkeit von Lastträgern mit winkelig zueinander angeordneten Lastaufnahmeflächenabschnitt und Ständeranlageflächenabschnitt zu erhöhen bzw. bei gleichbleibender Festigkeit und Steifigkeit die Dimensionen der Lastträger und den Materialeinsatz für diese zu verringern, indem eine Versteifung des Lastträgers durch eine Ausbildung eines Hohlprofils erreicht wird, bei welchem der Lastaufnahmeflächenabschnitt zur Aufnahme von Lasten und/oder der Ständeranlageflächenabschnitt zur Anordnung an einem Regalständer Teil des Hohlprofils sind.

Zusätzlich oder alternativ kann durch einen weiteren Aspekt der Erfindung, für den selbstständig Schutz begehrt wird, eine Versteifung eines Lastträgers durch das Vorsehen von einer oder mehreren Sicken am Lastaufnahmeflächenabschnitt und/oder Ständeranlageflächenabschnitt erreicht. Die Sicken stellen dabei Vertiefungen quer zur Lastaufnahmefläche des Lastaufnahmeflächenabschnitts bzw. zur Ständeranlagefläche des Ständeranlageflächenabschnitts dar, die beispielsweise durch Pressen oder Tiefziehen herstellbar sind.

Ein entsprechender Lastträger kann an einem seiner Enden in Längsrichtung eine Durchschubsicherung aufweisen, wobei die Durchschubsicherung an der Breitseite des Lastaufnahmeflächenabschnitts und/oder der Hochseite des Ständeranlageflächenabschnitts angeordnet sein kann.

Die Längsrichtung des Lastträgers ist durch seine maximale Erstreckung definiert, also in einer Richtung sowohl entlang des Lastaufnahmeflächenabschnitts als auch des Ständeranlageflächenabschnitts. Die Breite des Lastträgers wird durch die Breite des Lastaufnahmeflächenabschnitts definiert, die quer zur Längsrichtung und quer zum Ständeranlageflächenabschnitt verläuft. Der Ständeranlageflächenabschnitt wiederum verläuft entlang der Längsrichtung des Lastträgers und der Höhe des Lastträgers.

An einem Ende des Lastträgers in Längsrichtung kann weiterhin ein Stopp ausgebildet sein, der durch ein entlang der Breitseite des Lastaufnahmeflächenabschnitts verlaufende Erhöhung des Lastaufnahmeflächenabschnitts gebildet sein kann.

Zusätzlich zu den Lastaufnahmeflächenabschnitt und dem Ständeranlageflächenabschnitt kann der Lastträger weitere Verstärkungsflächenabschnitte aufweisen, die quer und/oder parallel zum Lastaufnahmeflächenabschnitt und/oder Ständeranlageflächenabschnitt verlaufen können. Bei dem Verstärkungsflächenabschnitten kann es sich um Begrenzungswände des Hohlprofils als auch um weitere zusätzliche Flächenabschnitte handeln.

Die Verstärkungsflächenabschnitte können beabstandet oder anliegend zum Lastaufnahmeflächenabschnitt und/oder Ständeranlageflächenabschnitt angeordnet sein, um Hohlraumstrukturen oder doppelwandige Bereiche zu erzeugen.

Ein Verstärkungsflächenabschnitt kann selbst wiederum zumindest teilweise doppelwandig ausgeführt sein.

Zwischen dem Lastaufnahmeflächenabschnitt und dem Ständeranlageflächenabschnitt kann ein sich entlang der Längsrichtung des Lastträgers erstreckender Schrägflächenabschnitt angeordnet sein, der wiederum Teil des Hohlprofils des Lastträgers sein kann. Neben der Versteifungswirkung des Schrägflächenabschnitts kann dieser zur Zentrierung eines auf dem Lastträger angeordneten Gegenstands dienen, insbesondere wenn beide Lastträger an gegenüberliegenden Regalständern, die zusammen ein Aufnahmefach für ein Lastaufnahmemittel definieren, so angeordnet sind, dass die Schrägflächenabschnitte aufeinander zuweisen. Dadurch wird erreicht, dass beim Beladen eines entsprechenden Regalfachs mit derartigen Lastträgern eine Selbstzentrierung stattfindet.

Zwischen den verschiedenen Flächenabschnitten des Lastträgers und insbesondere zwischen zueinander beabstandeten Flächenabschnitten des Lastträgers können Querverbindungen ausgebildet sein, um eine weitere Versteifung und Erhöhung der Stabilität des Lastträgers zu erreichen. Insbesondere können zwischen benachbarten, insbesondere parallel verlaufenden Flächenabschnitten ein oder mehrere quer zu den jeweiligen Flächen verlaufende Querverbindungen in Form von Clinchverbindungen vorgesehen sein. Clinchverbindungen werden durch Durchsetzfügen hergestellt, wobei die zu verbindenden Flächenabschnitte tiefgezogen werden und an der Kontaktstelle miteinander verpresst werden.

Bei der Versteifung mit Sicken können mehrere Sicken beabstandet zueinander in Längsrichtung des Lastträgers vorgesehen werden.

Die Sicken, die quer zum Lastaufnahmeflächenabschnitt und/oder Ständeranlageflächenabschnitt eine Mulde bilden, können eine beliebige Form mit einer Breite und Länge entlang der Fläche des Lastaufnahmeflächenabschnitts und/oder Ständeranlageflächenabschnitts aufweisen. Die Tiefe der Sicke ergibt sich in Richtung quer zum Lastaufnahmeflächenabschnitt und/oder Ständeranlageflächenabschnitt.

Entsprechend können die Sicken mit ihrer Form beispielsweise bezüglich ihrer Längserstreckung, also in Richtung ihrer maximalen Ausdehnung, in einer bestimmten relativen Position zur Längsrichtung des Lastträgers angeordnet werden, beispielsweise quer oder schräg zur Längsrichtung, um dadurch ein günstiges mechanisches Verhalten zu erreichen. Darüber hinaus können die Sicken entweder in den einzelnen Flächenabschnitten vorgesehen sein oder übergreifend angeordnet werden, beispielsweise von dem Lastaufnahmeflächenabschnitt zum Ständeranlageflächenabschnitt verlaufen.

Darüber hinaus ist es möglich, dass mehrere Sicken gleich oder unterschiedlich geformt und orientiert sein können, beispielsweise bezüglich ihrer Längserstreckung winkelig zueinander angeordnet sein können.

Bei einem entsprechenden Verfahren zur Herstellung eines derartigen Lastträgers kann von einem metallischen Blech ausgegangen werden, beispielsweise einem auf einem Bund aufgewickelten Blech oder einem platten- oder tafelförmigen Ausgangsmaterial. Das Blech kann aus einem beliebig geeigneten metallischen Material gebildet sein, wobei unterschiedlichste metallische Legierungen eingesetzt werden können.

Das entsprechende Blech bzw. der Blechstreifen wird durch Umformen zu einem entsprechenden Lastträger mit Lastaufnahmeflächenabschnitt zur Lagerung von Lasten und Ständeranlageflächenabschnitte zur Anordnung des Lastträgers an einem oder mehreren Regalständern eines Regals ausgebildet. Erfindungsgemäß erfolgt die Umformung des Blechs durch Profilieren so, dass ein Hohlprofil gebildet wird, wobei Lastaufnahmeflächenabschnitt und Ständeranlageflächenabschnitt zumindest teilweise das Hohlprofil darstellen. Alternativ oder zusätzlich können weitere Umformungen des Blechs durch Schneiden, insbesondere Laserschneiden, Stanzen, Biegen, Tiefziehen, Pressen und Durchsetzfügen durchgeführt werden. Dies gilt insbesondere dann, wenn die Versteifung durch die Ausbildung von Sicken erreicht werden soll.

Insbesondere kann bei dem Herstellverfahren ein Blechstreifen von einem Bund abgewickelt werden und abschnittsweise entsprechend der Länge der herzustellenden Lastträgern mit einem Schnittmuster versehen werden, wobei durch das Schnittmuster verschiedene Komponenten des Lastträgers für den anschließenden Umformungsprozess und die abschließende Vereinzelung der Lastträger aus dem Endlosblechstreifen definiert werden.

Das Schnittmuster kann während des kontinuierlichen Abwickelns des Blechstreifens durch mitlaufende Stanz - oder Schneidwerkzeuge und/oder durch Laserschneiden erzeugt werden. Anschließend kann der Blechstreifen durch Profilierung in die entsprechende Form gebracht werden, wobei der Blechstreifen hierbei beim kontinuierlichen Durchlaufen von verschiedenen Umformstationen in mehreren Schritten in die gewünschte Form gebracht wird.

Nachdem die verschieden Flächenabschnitte durch entsprechendes Umbiegen und Kanten in der gewünschten Form sind, können die einzelnen Lastträger vereinzelt werden, indem der nunmehr zu einem Profil umgeformte Blechstreifen entsprechend getrennt wird.

Der Lastträger kann nach dem Vereinzeln nachbearbeitet werden, insbesondere durch Biegen, Schneiden und/oder Durchsetzfügen. Beispielsweise kann eine Durchschubsicherung an einem Ende des Lastträgers quer zur Längserstreckung des Lastträgers durch Biegen eines entsprechend im Schnittmuster vorgesehenen Abschnitts hergestellt werden.

### KURZBESCHREIBUNG DER FIGUREN

Die beigefügten Zeichnungen zeigen in rein schematischer Weise in
- Figur 1: eine Seitenansicht eines erfindungsgemäßen Regals,
- Figur 2: eine perspektivische Darstellung eines erfindungsgemäßen Lastträgers,
- Figur 3: eine teilweise perspektivische Darstellung eines weiteren Lastträgers,
- Figur 4: eine Schnittansicht durch einen erfindungsgemäßen Lastträger,
- Figur 5: eine weitere Schnittansicht eines erfindungsgemäßen Lastträgers,
- Figur 6: noch eine Schnittansicht eines erfindungsgemäßen Lastträgers, und in
- Figur 7: eine Detaildarstellung eines erfindungsgemäßen Regals
- Figur 8: eine perspektivische Darstellung einer zweiten Ausführungsform eines erfindungsgemäßen Lastträgers,
- Figur 9: eine Ansicht des Lastträgers aus Figur 8 von hinten,
- Figur 10: eine Schnittansicht entlang der Schnittlinie A - A aus Figur 8, und in
- Figur 11: eine Schnittansicht entlang der Schnittlinie B - B aus Figur 8.

### AUSFÜHRUNGSBEISPIELE

Weitere Vorteile, Kennzeichen und Merkmale der vorliegenden Erfindung werden bei der nachfolgenden Beschreibung der Ausführungsbeispiele deutlich, wobei die Erfindung nicht auf diese Ausführungsbeispiele beschränkt ist.

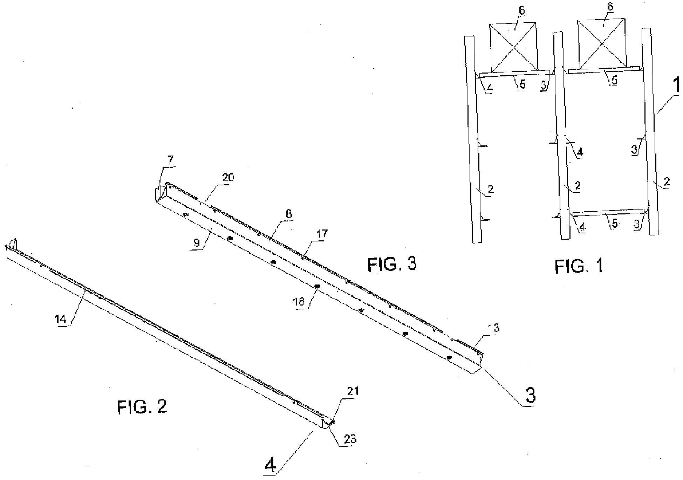

Die Figur 1 zeigt ein Regal 1 mit Regalständern 2, an denen Lastträger 3,4, und zwar linke Lastträger 4 und rechte Lastträger 3, angeordnet sind. Die linken Lastträger 4 sind rechts an den Regalständern 2 angeordnet und befinden sich auf der linken Seite eines Zwischenraums zwischen zwei Regalständern 2, während die rechten Lastträger 3 an der linken Seite der Regalständer 2 angeordnet sind und sich auf der rechten Seite des Zwischenraums zwischen den Regalständern 2 befinden.

Die Lastträger 3,4 dienen zur Aufnahme eines Lastaufnahmemittels 5, wie beispielweise eines Trays, eines Tablars, einer Palette oder einer vergleichbaren Vorrichtung, auf der wiederum zu lagernde Gegenstände oder Waren 6 gelagert sein können. Wie sich aus Figur 1 ergibt, hat das dargestellte Regal sechs Lagerplätze, von denen drei durch Lastaufnahmemittel 5 belegt sind und von denen wiederum zwei eingelagerte Waren 6 tragen. Das Regal 1 kann selbstverständlich so aufgebaut sein, dass in einer Richtung senkrecht zur Bildebene weitere Lagerplätze vorgesehen sind, so dass also mehrere Lastaufnahmemittel 5 hintereinander auf den Lastträgern 3,4 gelagert sein können.

Die Figuren 2 und 3 zeigen perspektivische Darstellungen der Lastträger 3,4, wobei in der Figur 3 der Lastträger 3 lediglich teilweise dargestellt ist. In der Figur 3 ist zur Verdeutlichung des Aufbaus eines Lastträgers 3 der obere Teil des Lastträgers 3 weggelassen worden, um die unteren Komponenten besser darzustellen.

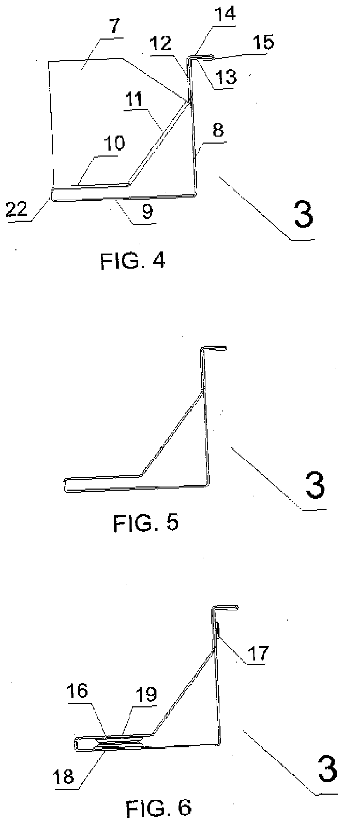

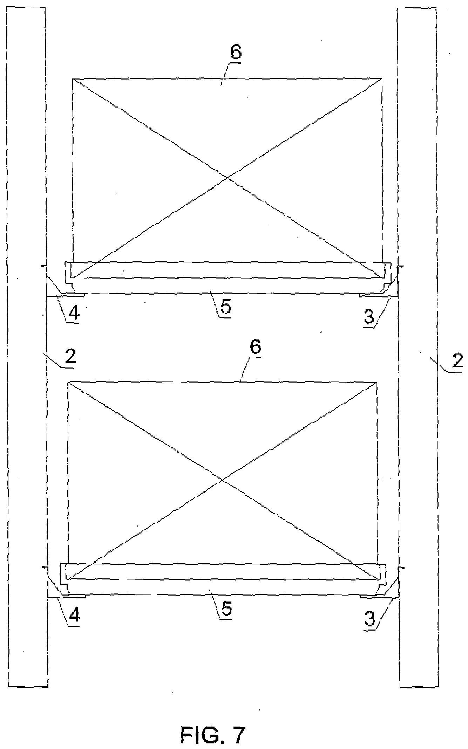

Die Figuren 4 bis 6 zeigen verschiedene Schnittdarstellungen eines rechten Lastträgers 3, wobei linke Lastträger 4, wie sich aus den Figuren 2 und 7 ergibt, spiegelsymmetrisch zu den rechten Lastträgern 3 ausgebildet sind.

Die Lastträger 3,4 sind als Hohlprofile ausgebildet, wobei durch das Hohlprofil eine hohe Festigkeit, insbesondere Biegesteifigkeit der Lastträger 3,4 bei geringem Materialeinsatz erzielt werden kann.

Die Lastträger 3,4 weisen jeweils einen Ständeranlageflächenabschnitt 8 auf, mit der die Lastträger 3,4 an den jeweiligen Ständern 2 eines Regals 1 angeordnet werden können.

Darüber hinaus weist jeder Lastträger 3,4 einen Lastaufnahmeflächenabschnitt 10 auf, auf der die Lastaufnahmemittel 5 gelagert werden und die sich quer, insbesondere senkrecht zum Ständeranlageflächenabschnitt 8 erstreckt. Parallel und beabstandet zum Lastaufnahmeflächenabschnitt 10 weist das Hohlprofil des Lastträgers 3,4 einen Stützflächenabschnitt 9 auf, die sich entsprechend ebenfalls quer zum Ständeranlageflächenabschnitt 8 und insbesondere senkrecht zu diesem erstreckt. Der Stützflächenabschnitt 9 ist direkt mit dem Ständeranlageflächenabschnitt 8 verbunden und bildet mit dieser einen Winkel, insbesondere einen Winkel von 90°. Der Stützflächenabschnitt 9 ist Teil des Hohlprofils und bildet einen Verstärkungsflächenabschnitt zur Erhöhung der Festigkeit und Biegesteifigkeit des Lastträgers 3,4.

Am gegenüberliegenden Ende des Ständeranlageflächenabschnitts 8 in Höhenrichtung, welches von dem Ende abgewandt ist, an dem der Stützflächenabschnitt 9 an dem Ständeranlageflächenabschnitt 8 angeordnet ist, ist ein weiterer Winkel ausgebildet, der jedoch entgegengesetzt zu dem Winkel ausgerichtet ist, der durch den Ständeranlageflächenabschnitt 8 und den Stützflächenabschnitt 9 gebildet ist. Dieser Winkel ist durch einen ersten Versteifungsflächenabschnitt 13 gebildet, der sich quer, insbesondere senkrecht zum Ständeranlageflächenabschnitt 8 entgegengesetzt zum Stützflächenabschnitt 9 und parallel zu diesem erstreckt.

Der Lastaufnahmeflächenabschnitt 10 ist parallel und beabstandet zum Stützflächenabschnitt 9 ausgebildet, wobei Lastaufnahmeflächenabschnitt 10 und Stützflächenabschnitt 9 über einen Verbindungssteg 22 miteinander verbunden sind, der sich quer zu dem Lastaufnahmeflächenabschnitt 10 und dem Stützflächenabschnitt 9 zwischen deren Enden erstreckt. Lastaufnahmeflächenabschnitt 10 und Stützflächenabschnitt 9 können auch so angeordnet sein, dass sie nicht parallel zueinander ausgeführt sind, auch wenn die bevorzugte Ausführungsform dies in den Fig. 4 bis 6 zeigt.

Der Lastaufnahmeflächenabschnitt 10 erstreckt sich bei dem gezeigten Ausführungsbeispiel im Querschnitt des erfindungsgemäßen Lastträgers 3,4 nicht über die gleiche Breite wie der Stützflächenabschnitt 9, sondern nur über einen Teil des Stützflächenabschnitts 9 in einer Richtung quer zur Längserstreckung des Lastträgers 3,4, also in einer Richtung die sich bei Lastträgern 3,4, die in ein Regal 1 eingebaut sind, zwischen den Ständern 2 über den Lagerplatz im Regal 1 erstreckt. Vielmehr ist der Lastaufnahmeflächenabschnitt 10 an dem dem Ende mit dem Verbindungsteg 22 gegenüberliegen Ende mit einem Schrägflächenabschnitt 11 verbunden, der sich in einem spitzen Winkel zum Stützflächenabschnitt 9 und zum Ständeranlageflächenabschnitt 8 erstreckt, sodass durch zumindest einen Teil des Stützflächenabschnitts 9, den Schrägflächenabschnitt 11 und zumindest einen Teil des Ständeranlageflächenabschnitts 8 im Querschnitt eine Dreiecksform gebildet ist, die den wesentlichen Hohlraum des Hohlprofils des Lastträgers 3,4 darstellt.

An den Schrägflächenabschnitt 11 schließt sich ein Doppelwandabschnitt 12 an, der sich parallel zum Ständeranlageflächenabschnitt 8 erstreckt. Parallel zum ersten Versteifungsflächenabschnitt 13 ist ein zweiter Versteifungsflächenabschnitt 14 vorgesehen, der sich quer, insbesondere senkrecht zum Doppelwandabschnitt 12 von diesem erstreckt und mit dem ersten Versteifungsflächenabschnitt 13 einen doppelwandigen Bereich bildet. An den zweiten Versteifungsflächenabschnitt 14 schließt sich ein Randabschnitt 15 an, der den ersten Versteifungsflächenabschnitt 13 in der Querschnittsansicht U-förmig umschließt.

Wie aus den Figuren 4 bis 6 deutlich wird, ist das Hohlprofil des Lastträgers 3,4 aus einem Blechstreifen gebildet, der durch entsprechende Biegungen und Kantungen, d.h. Profilierungen, in die entsprechende Form gebracht wird. Im Querschnitt durch einen als Ausgangsmaterial dienenden Metallstreifen sind der erste Versteifungsflächenabschnitt 13, der Ständeranlageflächenabschnitt 8, der Stützflächenabschnitt 9, der Verbindungssteg 22, der Lastaufnahmeflächenabschnitt 10, der Schrägflächenabschnitt 11, der Doppelwandabschnitt 12 und der zweite Versteifungsflächenabschnitt 14 sowie der Randabschnitt 15 miteinander verbunden und nebeneinander angeordnet und werden durch entsprechende Biegungen und Kantungen in die gezeigte Hohlprofilform gebracht. Der erste und zweite Versteifungsflächenabschnitt 13,14, der Stützflächenabschnitt 9, der Verbindungssteg 22, der Schrägflächenabschnitt 11 und der Doppelwandabschnitt 12 sowie der Randabschnitt 15 stellen jeweils Verstärkungsflächenabschnitte zur Erhöhung der Festigkeit und Biegesteifigkeit im Sinne der vorliegenden Erfindung dar.

Die Figur 5 zeigt eine Schnittansicht ohne die Durchschubsicherung 7, die an einem Ende des Lastträgers 3,4 angeordnet ist, um ein Durchschieben der Lastaufnahmemittel 5 und der darauf gelagerten Waren 6 in den durch die Lastträger 3,4 gebildeten Lagerplätzen zu verhindern.

Wie sich aus den Figuren 2 und 3 sowie der Figur 4 ergibt, ist die Durchschubsicherung 7 durch einen Wandabschnitt gebildet, der sich quer zur Längserstreckung des Lastträgers 3,4 an einem Ende des Lastträgers 3,4 erstreckt und dabei gleichzeitig quer zum Lastaufnahmeflächenabschnitt 10 und zum Ständeranlageflächenabschnitt 8 ausgebildet ist. Die Durchschubsicherung 7 kann ebenfalls durch entsprechendes Biegen und Kanten eines Metallstreifens hergestellt werden, wobei die Biegeachse quer zur Längserstreckung des Lastträgers 3,4 verläuft. Entsprechend wird die Durchschubsicherung 7 nach der Profilierung eines Endlosmetallstreifens in die Hohlprofilform und dem Abschneiden des Lastträgers von dem Endlosmetallstreifen entsprechend der gewünschten Länge des Lastträgers 3,4 durch Biegen eines oder mehrerer Abschnitte des Metallstreifens erzeugt, die bereits vor der Profilierung des Endlosmetallstreifens in dem Zuschnitt des Endlosmetallstreifen, z.B. durch Stanzen oder Laserschneiden, erzeugt worden sind. Alternativ kann die Durchschubsicherung durch ein zusätzliches Bauteil und/oder nachträglich nach der Profilierung angeordnet werden.

Die Durchschubsicherung 7 ist auch in der Figur 6 nicht dargestellt. Allerdings ist in dieser Figur gezeigt, dass entlang der Längserstreckung des Lastträgers 3,4 der Lastaufnahmeflächenabschnitt 10 und der Stützflächenabschnitt 9 voneinander beabstandet mehrere Clinchverbindungen 16 aufweisen, die durch Durchsetzfügen oder Clinchen von entsprechenden Bereichen des Lastaufnahmeflächenabschnitts 10 und des Stützflächenabschnitts 9 hergestellt werden. Beim Durchsetzfügen werden entsprechende Bereiche, beispielsweise kreisförmige Abschnitte des Lastaufnahmeflächenabschnitts 10 und des Stützflächenabschnitts 9 tiefgezogen und miteinander verpresst, so dass eine Verbindung zwischen dem Lastaufnahmeflächenabschnitt 10 und dem Stützflächenabschnitt 9 entsteht. Dadurch kann die Festigkeit und Stabilität des Lastträgers 3,4 weiter erhöht werden.

In der Figur 6 sind der geclinchte Bereich 19 des Lastaufnahmeflächenabschnitts 10 und des Clinchabschnitts 18 des Stützflächenabschnitts 9 zu sehen. Durch die entlang der Längserstreckung beabstandet voneinander angeordneten, mehreren Clinchverbindungen 16, wie dies auch in der Figur 3 mit der Darstellung der Clinchabschnitte 18 des Stützflächenabschnitts 9 zu sehen ist, kann die Steifigkeit des Hohlprofils der Lastträger 3,4 weiter gesteigert werden.

Der Lastträger 3,4 besitzt zudem weitere Clinchverbindungen 17, die ebenfalls beabstandet zueinander entlang der Längserstreckung des Lastträgers 3,4 angeordnet sind und mit denen der Doppelwandabschnitt 12 und der Ständeranlageflächenabschnitt 8 miteinander verbunden sind. Damit kann die Verbindung der Enden des Metallstreifens mittels des Randabschnitts 15 zusätzlich stabilisiert werden. Gleichzeitig können bei diesen Clinchverbindungen 17 Durchgangsöffnungen für Nietverbindungen mit den Ständern 2 des Regals 1 ausgebildet werden, die jedoch natürlich auch separat ausgebildet sein können.

Da der erste Versteifungsflächenabschnitt 13 und der zweite Versteifungsflächenabschnitt 14 mit umgebogenen Randabschnitt 15 von der Ständeranlageflächenabschnitt 8 hervorstehen, sind in dem Lastträger 3,4 ein oder mehrere Ausschnitte 20 zur Aufnahme der Ständer 2 des Regals 1 vorgesehen, bei denen der erste Versteifungsflächenabschnitt 13 und der zweite Versteifungsflächenabschnitt 14 sowie der umgebogene Randabschnitt 15 ausgeschnitten und entfernt sind, um Platz für die Aufnahme eines Ständers 2 zu machen.

Wie der Figur 2 zu entnehmen ist, kann an dem Ende des Lastträgers 3,4, welches dem Ende gegenüberliegt, an der die Durchschubsicherung 7 vorgesehen ist, ein Stopp 21, ein so genannter Frontstopp oder Behälterstopp, ausgebildet sein, der als von dem Lastaufnahmeflächenabschnitt 10 hervorstehender Vorsprung ausgebildet sein kann, um zu verhindern, dass das Lastaufnahmemittel 5 an dem offenen Ende des Lastträgers 3,4 aus dem Regal gleiten kann.

An der der Durchschubsicherung 7 gegenüberliegenden Vorderseite des Lastträgers 3,4 kann zudem an dem Schrägflächenabschnitt 11 eine Einfuhrschräge 23 ausgebildet sein, die einen Flächenabschnitt darstellt, der die Einfuhröffnung zwischen zwei korrespondierend Lastträgern 3,4, also einem linken Lastträger 4 und einem rechten Lastträger 3 erweitert, um ein leichtes Einführen eines Lastaufnahmeträgers 5 zu ermöglichen. Entsprechend ist die Einfuhrschräge 23 schräg nach vorne und schräg in Richtung des Ständeranlageflächenabschnitts 8 an dem Schrägflächenabschnitt 11 angeordnet.

Die Figur 7 zeigt in einem größeren Detail die Anordnung der Lastträger 3,4 an den Ständern 2 eines Regals 1, wobei dargestellt ist, dass durch die Schrägflächenabschnitte 11 eine automatische Zentrierung der aufgenommenen Lastaufnahmemittel 5 erreicht werden kann. In der unteren Lagerposition der Figur 7 ist das Lastaufnahmemittel 5 mit der zu lagernden Ware 6 genau mittig zwischen zwei Lastträgern 3,4 angeordnet, währen das Lastaufnahmemittel 5 mit der zu lagernden Ware 6 in der oberen Lagerposition der Figur 7 exzentrisch gelagert ist, und zwar verschoben in Richtung des rechten Lastträgers 3. Durch den Schrägflächenabschnitt 11 wird jedoch verhindert, dass das Lastaufnahmemittel 5 weiter in Richtung des rechten Lastenträgers 3 verschoben werden kann, so dass keine Gefahr besteht, dass an der anderen Seite beim linken Lastträger 4 der Lastaufnahmeflächenabschnitt 10 verlassen wird.

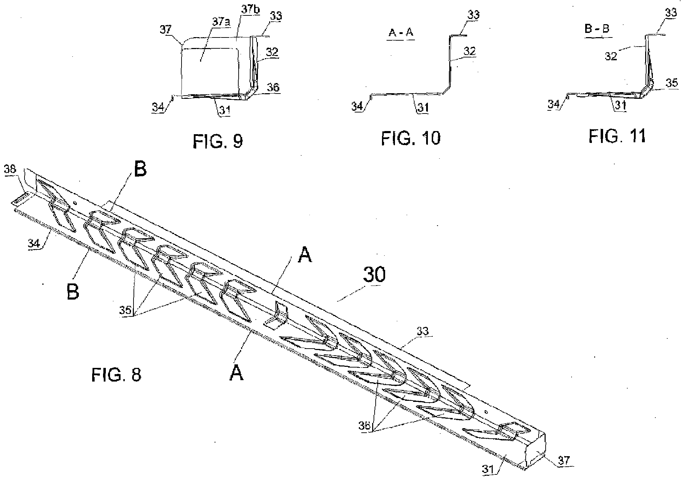

Die Figur 8 zeigt eine perspektivische Darstellung einer zweiten Ausführungsform eines Lastträgers 30, bei welchem die erhöhte Festigkeit und Biegesteifigkeit nicht durch die Ausbildung eines Hohlraums erreicht wird, sondern durch das Vorsehen von Sicken 35, 36, welche als muldenartige Vertiefungen am Lastaufnahmeflächenabschnitt 31 und dem Ständeranlageflächenabschnitt 32 ausgebildet sind. Bei dem gezeigten Ausführungsbeispiel verlaufen die Sicken 35, 36 von dem Lastaufnahmeflächenabschnitt 31 zum Ständeranlageflächenabschnitt 32 und sind somit über die Flächenabschnittsgrenzen hinweg ausgebildet. Statt dieser in Figur 8 gezeigten Ausführungsform ist es jedoch auch möglich, dass die Sicken lediglich am Lastaufnahmeflächenabschnitt 31 oder am Ständeranlageflächenabschnitt 32 angeordnet sind. Darüber hinaus weist der Lastträger 30 des zweiten Ausführungsbeispiels weitere Verstärkungsflächenabschnitte, nämlich einen dritten Versteifungsflächenabschnitt 33 und einen vierten Versteifungsflächenabschnitt 34 auf, die jeweils an der Längsseite des Lastaufnahmeflächenabschnitts 31 bzw. des Ständeranlageflächenabschnitts 32 winkelig angeordnet sind. Bei dem gezeigten Ausführungsbeispiel ist der dritte und vierte Versteifungsflächenabschnitt jeweils rechtwinkelig zu dem jeweiligen Lastaufnahmeflächenabschnitt 31 bzw. Ständeranlageflächenabschnitt 30 ausgebildet, wie sich insbesondere aus den Figuren 9 bis 11 ergibt.

Um dem Ständeranlageflächenabschnitt 32 zu ermöglichen, direkt an einem Regalständer anzuliegen, weist der dritte Versteifungsflächenabschnitt 33 Aussparungen auf, in denen die entsprechenden Regalständer zu liegen kommen.

Wie bei dem ersten Ausführungsbeispiel sind auch beim Lastträger 30 des zweiten Ausführungsbeispiels an einem Ende des Lastträgers in Längsrichtung eine Durchschubsicherung 37 und am anderen Ende ein Stopp 38 angeordnet, die eine sichere Aufnahme eines Lastaufnahmemittels 5 bzw. der entsprechenden Waren auf den Lastträgern ermöglichen.

Die Figur 9 zeigt den Lastträger 30 von der Rückseite, also von dem Ende, welches die Durchschubsicherung 37 aufweist. In der Ansicht der Figur 9 ist die von dem Lastaufnahmeflächenabschnitt 31 zum Ständeranlageflächenabschnitt 32 durchgehend verlaufende Sicke 36 mit einer entsprechenden Vertiefung quer zur Lastaufnahmefläche des Lastflächenabschnitts 31 und zur Ständeranlagenfläche des Ständeranlageflächenabschnitts 32 zu erkennen. Darüber hinaus sind die Versteifungsflächenabschnitte 33 und 34 zu erkennen, die sich jeweils rechtwinklig an den Längsseiten des Lastaufnahmeflächenabschnitts 31 bzw. des Ständeranlageflächenabschnitts 32 von der Lastaufnahmefläche weg bzw. zur Ständeranlagefläche hin erstrecken.

Wie aus der Figur 9 ebenfalls zu entnehmen ist, ist die Durchschubsicherung 37 zweiteilig ausgebildet, nämlich mit einem ersten Teil 37a und einem zweiten Teil 37b. Das erste Teil 37a ist an dem Lastaufnahmeflächenabschnitt 31 angeordnet, und kann durch einfaches Umbiegen eines entsprechenden Abschnitts nach der Formgebung des Lastträgers hergestellt werden. Darüber hinaus weist die Durchschubsicherung 37 ein zweites Teil 37b auf, welches an dem Ständeranlageflächenabschnitt 32 angeordnet ist und ebenfalls durch entsprechendes Umbiegen nach der Formgebung des Lastträgers herstellbar ist.

Die Figuren 10 und 11 zeigen zwei Schnittansichten entlang der Schnittlinien A-A und B-B aus Figur 8, wobei der Unterschied zwischen einem Bereich, in dem keine Sicke vorliegt (Figur 10) und dem Bereich, in dem eine Sicke 35 ausgebildet ist, deutlich wird.

Die Sicke 35 ist, wie in Figur 11 zu erkennen ist, als Mulde in dem Lastaufnahmeflächenabschnitt 31 und dem Ständeranlageflächenabschnitt 32 ausgebildet.

In der Figur 8 sind die Sicken 35 und 36 als rechteckförmige Streifen dargestellt. Allerdings ist für den Fachmann selbstverständlich, dass die Sicken unterschiedliche Formen aufweisen können.

Darüber hinaus sind die Sicken 35 und 36 unterschiedlich orientiert an dem Lastträger 30 angeordnet, wobei eine Längsrichtung, die durch die maximale Ausdehnung der Sicke 35, 36 definiert ist, schräg zur Längsrichtung des Lastträgers 30 angeordnet ist. Zudem sind die Sicken 35, die untereinander parallel ausgerichtet sind und die Sicken 36, die wiederum parallel zueinander ausgerichtet sind, gegenseitig in einem Winkel angeordnet, sodass die Längsrichtungen der Sicken 35, 36 einen spitzen Winkel miteinander einschließen. Durch die unterschiedliche Orientierung der Sicken 35, 36, kann die Versteifungswirkung weiter erhöht werden.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen verwirklicht werden können, solange der Schutzbereich der beigefügten Ansprüche nicht verlassen wird. Die Offenbarung der vorliegenden Erfindung schließt sämtliche Kombinationen der vorgestellten Einzelmerkmale mit ein.

### BEZUGSZEICHENLISTE

- 1: Regal
- 2: Regalständer
- 3: rechter Lastträger
- 4: linker Lastträger
- 5: Lastaufnahmemittel
- 6: Ware
- 7: Durchschubsicherung
- 8: Ständeranlageflächenabschnitt
- 9: Stützflächenabschnitt
- 10: Lastaufnahmeflächenabschnitt
- 11: Schrägflächenabschnitt
- 12: Doppelwandabschnitt
- 13: erster Versteifungsflächenabschnitt
- 14: zweiter Versteifungsflächenabschnitt
- 15: Randabschnitt
- 16: Clinchverbindung
- 17: Clinchverbindung
- 18: Clinchabschnitt
- 19: geclinchter Bereich
- 20: Ausschnitt
- 21: Stopp
- 22: Verbindungssteg
- 23: Einfuhrschräge
- 30: Lastträger
- 31: Lastaufnahmeflächenabschnitt
- 32: Ständeranlageflächenabschnitt
- 33: dritter Versteifungsflächenabschnitt
- 34: vierter Versteifungsflächenabschnitt
- 35: Sicken
- 36: Sicken
- 37: Durchschubsicherung
- 37a, 37b: Teile der Durchschubsicherung
- 38: Stopp

## Patentansprüche

1. Lastträger für ein Regal zur Anordnung an einem oder mehreren Regalständern und zur Aufnahme von Lasten mit einem Lastaufnahmeflächenabschnitt zur Lagerung von Lasten und einem Ständeranlageflächenabschnitt zur Anordnung des Lastträgers an dem oder den Regalständern, wobei der Lastaufnahmeflächenabschnitt sich entlang der Länge und Breite des Lastträgers erstreckt und der Ständeranlageflächenabschnitt sich entlang der Länge und der Höhe des Lastträgers verläuft, wobei Lastaufnahmeflächenabschnitt und Ständeranlageflächenabschnitt quer zueinander angeordnet sind, um einen Auflagewinkel zu bilden,
**dadurch gekennzeichnet, dass**
zur Versteifung des Lastträgers Lastaufnahmeflächenabschnitt und/oder Ständeranlageflächenabschnitt Teil eine Hohlprofils sind und/oder eine oder mehrere Sicken aufweisen.

2. Lastträger nach Anspruch 1,
**dadurch gekennzeichnet, dass**
an einem Ende des Lastträgers an der Breitseite des Lastaufnahmeflächenabschnitts und/oder der Hochseite des Ständeranlageflächenabschnitts eine quer zur Längsrichtung des Lastträgers verlaufende Durchschubsicherung angeordnet ist.

3. Lastträger nach Anspruch 1 oder 2,
**dadurch gekennzeichnet, dass**
an einem Ende des Lastträgers ein entlang der Breitseite des Lastaufnahmeflächenabschnitts verlaufender Stopp angeordnet ist.

4. Lastträger nach einem der vorhergehenden Ansprüche,
**dadurch gekennzeichnet, dass**
zumindest teilweise entlang der Längsrichtung des Lastträgers eine oder mehrere quer und/oder parallel zum Lastaufnahmeflächenabschnitt und/oder Ständeranlageflächenabschnitt verlaufende Verstärkungsflächenabschnitte angeordnet sind.

5. Lastträger nach einem der vorhergehenden Ansprüche,
**dadurch gekennzeichnet, dass**
der Verstärkungsflächenabschnitt beabstandet oder anliegend zum Lastaufnahmeflächenabschnitt und/oder Ständeranlageflächenabschnitt angeordnet ist.

6. Lastträger nach einem der vorhergehenden Ansprüche,
**dadurch gekennzeichnet, dass**
der Verstärkungsflächenabschnitt zumindest teilweise doppelwandig ausgeführt ist.

7. Lastträger nach einem der vorhergehenden Ansprüche,
**dadurch gekennzeichnet, dass**
zwischen Lastaufnahmeflächenabschnitt (10) und Ständeranlageflächenabschnitt (8) ein sich entlang der Längsrichtung des Lastträgers erstreckender Schrägflächenabschnitt angeordnet ist, wobei der Schrägflächenabschnitt insbesondere Teil des Hohlprofils ist.

8. Lastträger nach einem der vorhergehenden Ansprüche,
**dadurch gekennzeichnet, dass**
der Verstärkungsflächenabschnitt Teil des Hohlprofils ist.

9. Lastträger nach einem der vorhergehenden Ansprüche,
**dadurch gekennzeichnet, dass**
der Lastträger im Bereich von benachbart, insbesondere parallel verlaufenden Flächen eine oder mehrere quer zur Längsrichtung des Lastträgers verlaufende Querverbindungen, insbesondere in Form von Clinchverbindungen aufweist.

10. Lastträger nach einem der vorhergehenden Ansprüche,
**dadurch gekennzeichnet, dass**
der Lastträger entlang der Längsrichtung mehrere zueinander in Längsrichtung beabstandete Sicken aufweist.

11. Lastträger nach einem der vorhergehenden Ansprüche,
**dadurch gekennzeichnet, dass**
die Sicken quer zum Lastaufnahmeflächenabschnitt (10) und/oder Ständeranlageflächenabschnitt (8) eine Mulde bilden, die eine beliebige Form mit einer Breite und Länge entlang dem Lastaufnahmeflächenabschnitt (10) und/oder Ständeranlageflächenabschnitt (8) und einer Tiefe quer zum Lastaufnahmeflächenabschnitt (10) und/oder Ständeranlageflächenabschnitt (8) aufweisen, wobei insbesondere die Sicken mit ihrer Länge quer oder schräg zur Längsrichtung des Lastträgers angeordnet sind und/oder die Sicken von dem Lastaufnahmeflächenabschnitt (10) zum Ständeranlageflächenabschnitt (8) verlaufen.

12. Lastträger nach einem der vorhergehenden Ansprüche,
**dadurch gekennzeichnet, dass**
mehrere Sicken bezüglich ihren Längsrichtungen winkelig zueinander angeordnet sind.

13. Verfahren zur Herstellung eines Lastträgers für ein Regal, insbesondere eines Lastträgers nach einem der vorhergehenden Ansprüche, bei welchem der Lastträger aus einem Blech umgeformt wird, sodass ein Lastaufnahmeflächenabschnitt zur Lagerung von Lasten und ein Ständeranlageflächenabschnitt zur Anordnung des Lastträgers an dem oder den Regalständern des Regals ausgebildet werden, wobei der Lastaufnahmeflächenabschnitt sich entlang der Länge und Breite des Lastträgers erstreckt und der Ständeranlageflächenabschnitt sich entlang der Länge und der Höhe des Lastträgers verläuft, wobei Lastaufnahmeflächenabschnitt und Ständeranlageflächenabschnitt quer zueinander angeordnet sind, um einen Auflagewinkel zu bilden,
**dadurch gekennzeichnet, dass**
die Umformung des Blechs durch Profilieren des Blechs zu einem Hohlprofil erfolgt, wobei Lastaufnahmeflächenabschnitt und Ständeranlageflächenabschnitt zumindest teilweise Teil des Hohlprofils sind, und/oder dass die Umformung des Blechs durch mindestens einen Vorgang aus der Gruppe erfolgt, die Schneiden, Laserschneiden, Stanzen, Biegen, Tiefziehen, Pressen und Durchsetzfügen umfasst.

14. Verfahren nach Anspruch 13,
**dadurch gekennzeichnet, dass**
ein Blechstreifen von einem Bund abgewickelt wird und abschnittsweise entsprechend der Länge der herzustellenden Lastträger mit einem Schnittmuster versehen wird, ohne die einzelnen Lastträger voneinander zu trennen, wobei nachfolgend der Blechstreifen während eines kontinuierlichen Transports durch eine Umformanlage profiliert wird und wobei nach dem Profilieren das erzeugte Profil in die einzelnen Lastträger zertrennt wird.

15. Verfahren nach Anspruch 13 oder 14,
**dadurch gekennzeichnet, dass**
die Lastträger nach dem Vereinzeln nachbearbeitet werden, insbesondere durch einen Vorgang aus der Gruppe, die Biegen, Schneiden und Durchsetzfügen umfasst.

16. Regal mit mehreren Regalständern und mehreren Lastträgern nach einem der Ansprüche 1 bis 12, die an den Regalständern angeordnet sind.
